# EUROPEAN PATENT APPLICATION

(11) **EP 4 529 211 A1**
(43) Date of publication of application: **26.03.2025**
(21) Application number: 23826364.4
(22) Date of filing: 19.06.2023
(51) Int. Cl.: H04R 1/10

(54) **CHARGING BOX AND EARBUD ASSEMBLY**

(30) Priority: 21.06.2022 CN 202210705712; 19.08.2022 CN 202222200714 U
(71) Applicant: Huawei Technologies Co., Ltd., Shenzhen, Guangdong 518129 (CN)
(72) Inventor: HU, Shiyan, Shenzhen, Guangdong 518129 (CN); HE, Chao, Shenzhen, Guangdong 518129 (CN); ZHANG, Chongwei, Shenzhen, Guangdong 518129 (CN)
(74) Representative: Pfenning, Meinig & Partner mbB
(86) International application number: PCT/CN2023/101147
(87) International publication number: WO 2023/246716

(57) **Abstract**

This application discloses a charging case and an earphone assembly. The charging case has two earphone slots that are disposed at an interval, and the earphone slot is configured to accommodate an earphone. The charging case includes a case body and a case cover, and the case cover is rotatably connected to the case body. The earphone slot includes a top slot and a bottom slot that are located in the case body. The top slot is configured to accommodate an earbud of the earphone. The bottom slot is configured to accommodate a stem of the earphone. The case body includes a top surface disposed to face the case cover. Both an opening of the top slot and an opening of the bottom slot are located on the top surface of the case body, and the opening of the bottom slot is lower than the opening of the top slot. A structure of the charging case is designed, so that it is easy to take out an earphone placed in the case, to help improve user experience.

## Description

This application claims priority to Chinese Patent Application No. 202210705712.8, filed with the China National Intellectual Property Administration on June 21, 2022 and entitled "EARPHONE AND EARPHONE ASSEMBLY", which is incorporated herein by reference in its entirety. This application claims priority to Chinese Patent Application No. 202222200714.X, filed with the China National Intellectual Property Administration on August 19, 2022 and entitled "CHARGING CASE AND EARPHONE ASSEMBLY", which is incorporated herein by reference in its entirety.

### TECHNICAL FIELD

This application relates to the field of audio technologies, and in particular, to a charging case and an earphone assembly.

### BACKGROUND

Since wireless earphones abandon conventional cable connections, and are more convenient to use, they are favored by increasingly more consumers. A product, for example, an earphone assembly, related to the wireless earphone usually includes an earphone and a charging case. The charging case includes a battery that can charge the earphone, to meet a long-term use requirement of a user.

In a conventional earphone assembly, after an earphone is placed in a charging case, it is difficult to take out the earphone due to magnetic attraction force between the charging case and the earphone, resulting in poor user experience.

### SUMMARY

This application provides a charging case and an earphone assembly. A structure of the charging case is designed, so that it is easy to take out an earphone placed in the case, to help improve user experience.

According to a first aspect, an embodiment of this application provides a charging case. The charging case has two earphone slots that are disposed at an interval, and the earphone slot is configured to accommodate an earphone. The charging case includes a case body and a case cover, and the case cover is rotatably connected to the case body. The earphone slot includes a top slot and a bottom slot that are located in the case body. The top slot is configured to accommodate an earbud of the earphone. The bottom slot is configured to accommodate a stem of the earphone. The case body includes a top surface disposed to face the case cover. Both an opening of the top slot and an opening of the bottom slot are located on the top surface of the case body, and the opening of the bottom slot is lower than the opening of the top slot.

In this embodiment of this application, a display surface of the charging case is an inclined surface. When the earphone is placed in the earphone slot, a large part of the earphone is exposed relative to the charging case, so that a user can easily take out the earphone, to improve user experience of taking out the earphone from the charging case, ensure specific aesthetics, and improve product appearance exquisiteness.

In some possible implementations, the opening of the bottom slot and the opening of the top slot are disposed at an interval. In this case, an end that is of the opening of the bottom slot and that is close to the opening of the top slot is lower than an end that is of the opening of the top slot and that is close to the opening of the bottom slot. In this implementation, the opening of the bottom slot may be significantly lower than the opening of the top slot, so that when the earphone is placed in the earphone slot, a larger part of the earphone is exposed relative to the charging case.

In some possible implementations, a lowest part of a bottom wall of the top slot is not lower than a lowest edge of the opening of the bottom slot. In this implementation, when the earphone is placed in the earphone slot, a larger part of the earphone is exposed relative to the charging case.

In some possible implementations, the case body has a first end and a second end that are disposed opposite to each other, the case cover has a first end and a second end that are disposed opposite to each other, the first end of the case cover is rotatably connected to the first end of the case body, and the second end of the case cover is far away from the second end of the case body, to open the case cover relative to the case body, or the second end of the case cover is close to the second end of the case body, to close the case cover relative to the case body; and the top slot is closer to the first end of the case body than the bottom slot.

In some possible implementations, the first end of the case body is higher than the second end of the case body.

In some possible implementations, the case body includes a case body housing and a case body lining, the case body lining is fastened on an inner side of the case body housing, the case body lining has the top slot and the bottom slot, and a top part of the case body lining protrudes relative to the case body housing. In this case, a top surface of the case body housing protrudes relative to a top surface of the case body lining, so that the user can more conveniently take out the earphone placed in the charging case, to improve user experience.

In some possible implementations, the top surface of the case body housing is a plane, so that processing difficulty of the case body housing and a case cover housing is reduced, the case body housing and the case cover housing are easily closed, and a parting surface of the charging case is a plane. In this case, an appearance of the charging case is exquisite and concise. In some other embodiments, the parting surface of the charging case may alternatively be a curved surface. This is not strictly limited in this embodiment of this application.

The top surface of the case body lining is a curved surface, so that shapes of an opening of the top slot and an opening of the bottom slot better match and support the earphone. In this case, the earphone is stably and reliably placed in the charging case, and is convenient for the user to take out. In addition, the display surface of the charging case is beautiful and exquisite. In some other embodiments, the top surface of the case body housing may alternatively be a plane. This is not strictly limited in this embodiment of this application.

In some possible implementations, the charging case has a width direction, a thickness direction, and a height direction that are perpendicular to each other, the two earphone slots are arranged in the width direction of the charging case, a dimension of the charging case in the height direction is greater than a dimension of the charging case in the thickness direction, and the top surface of the case body housing is inclined to the thickness direction of the charging case, and is inclined to the height direction of the charging case.

In some possible implementations, the charging case includes a magnet, and the magnet is fastened to the case body lining, and is located between the top slot and the bottom slot. In this implementation, there is large space between the top slot and the bottom slot, so that a magnet with a large volume can be placed, to increase magnetic attraction force used to attract the earphone. When the earphone is placed in the earphone slot, a magnetic attraction member of the earphone and the magnet of the charging case are disposed opposite to each other, and the magnetic attraction member and the magnet are close to each other and have a small spacing, to generate sufficient magnetic attraction force, so that the first earphone is stably placed in the charging case.

In some possible implementations, the charging case further includes a battery and a circuit board, both the battery and the circuit board are fastened on the inner side of the case body housing, and are located below the case body lining, the circuit board is located below the bottom slot, and the battery is located below the top slot. In this case, the battery and the circuit board may be arranged by fully using space in the case body, and space utilization of the charging case is high.

In some possible implementations, the charging case further includes a hinge assembly, the hinge assembly includes a rotating shaft and a hinge bracket, the hinge bracket is fastened to the case body, and the case cover is rotatably connected to the hinge bracket by using the rotating shaft, to be rotatably connected to the case body.

In some possible implementations, the charging case further includes a wireless charging coil, and the wireless charging coil is fastened in the case body; and the hinge bracket includes a metal part and a plastic part, the plastic part is located between the metal part and the wireless charging coil, and the rotating shaft is inserted into the metal part.

In this implementation, the hinge bracket may reduce adverse impact of a metal piece on the charging case in a wireless charging process while ensuring strength of a connection structure, to ensure wireless charging performance of an earphone assembly.

The hinge bracket may be an integrally formed structural member, to have high structural strength. For example, the hinge bracket may be formed by using a metal injection molding (Metal injection Molding, MIM) process, a metal insert injection molding process, or the like.

In some possible implementations, the case cover includes an adapter block, and the adapter block is rotatably connected to the hinge bracket by using the rotating shaft. The case body is provided with a notch, and when the case cover is closed relative to the case body, the adapter block covers the notch. In this case, the appearance of the charging case is complete.

In some possible implementations, the hinge assembly further includes a decorative part, and the decorative part is fastened on an outer side of the adapter block and covers an outer side surface of the adapter block.

In this implementation, the decorative part covers the outer side surface of the adapter block. When the charging case is closed, the decorative part covers the notch of the case body, and jointly forms the appearance of the charging case with the case body.

In some possible implementations, the decorative part is made of an aluminum alloy material. In this case, the decorative part is beautiful and has high structural strength, and impact on the wireless charging process of the charging case can be reduced. The decorative part may be formed by bending a plate, has high structural strength, is easy to process, and has low costs.

In some possible implementations, the decorative part includes a first plate, a second plate, and a third plate, the second plate and the third plate are respectively connected to two ends of the first plate, and are both bent to the first plate, the first plate covers the outer side surface of the adapter block, and the rotating shaft is inserted into the second plate and the third plate.

In this implementation, a structure in which two ends pass through the shaft is designed for the decorative part. Therefore, a problem of uneven gaps between the decorative part and both a conventional rear-mounted decorative part and the case body is resolved, and aesthetics is improved. In addition, support for the rotating shaft is increased, so that structural strength of the hinge assembly is high, to improve reliability.

In some possible implementations, the hinge assembly further includes a torsion spring, one end of the torsion spring is connected to the hinge bracket, and the other end of the torsion spring is connected to the adapter block. In this implementation, the torsion spring is disposed, so that a feel of opening and closing the cover is achieved for the charging case.

In some possible implementations, the charging case includes a first electrode, a second electrode, a third electrode, and a fourth electrode, both the first electrode and the second electrode are at least partially located in one earphone slot, both the third electrode and the fourth electrode are at least partially located in the other earphone slot, the second electrode and the third electrode are located between the first electrode and the fourth electrode, a polarity of the first electrode is the same as a polarity of the third electrode, and a polarity of the second electrode is the same as a polarity of the fourth electrode.

In this implementation, when the earphone is correctly placed in the charging case, polarities of contacts of the earphone correspond to the polarities of the plurality of electrodes of the charging case, there is a correct connection, and the earphone can normally communicate with the charging case and be charged. When the earphone is incorrectly placed in the charging case in a manner of reversely placing two earphones, polarities of contacts of the earphone still correspond to the polarities of the plurality of electrodes of the charging case, and there is a correct connection. Therefore, damage to a next circuit of the earphone can be effectively avoided, and the earphone and the earphone assembly have a long service life.

According to a second aspect, an embodiment of this application further provides an earphone assembly. The earphone assembly includes two earphones and the charging case according to any one of the foregoing implementations.

### BRIEF DESCRIPTION OF DRAWINGS

FIG. 1A is a rear view of an earphone in some embodiments according to this application;
FIG. 1B is a left view of the earphone shown in FIG. 1A;
FIG. 2 is a diagram of a structure of the earphone shown in FIG. 1A in some use scenarios;
FIG. 3 is a diagram of a partial exploded structure of the earphone shown in FIG. 1A;
FIG. 4 is a diagram of a cross-sectional structure that is of the earphone shown in FIG. 1A and that is taken along A-A;
FIG. 5 is a block diagram of some circuits of the earphone shown in FIG. 1A;
FIG. 6 is a diagram of an exploded structure of a housing shown in FIG. 3;
FIG. 7 is a diagram of an internal structure of a housing shown in FIG. 3;
FIG. 8 is a diagram of a structure of an earphone assembly in some embodiments according to an embodiment of this application;
FIG. 9 is a diagram of a structure of the earphone assembly shown in FIG. 8 in another use state;
FIG. 10A is a diagram of a structure of a charging case of the earphone assembly shown in FIG. 9 in another use state;
FIG. 10B is a diagram of a structure of the charging case shown in FIG. 10A at another angle;
FIG. 11 is a diagram of a partial exploded structure of a charging case shown in FIG. 9;
FIG. 12 is a diagram of a cross-sectional structure of FIG. 10A along C-C;
FIG. 13 is a diagram of a cross-sectional structure of FIG. 10A along D-D;
FIG. 14 is a diagram of a structure of the earphone assembly shown in FIG. 8 at another angle;
FIG. 15 is a diagram of a partial structure of the charging case shown in FIG. 11;
FIG. 16 is a diagram 1 of an assembly structure of the partial structure in FIG. 15;
FIG. 17 is a diagram 2 of an assembly structure of the partial structure in FIG. 15;
FIG. 18 is a diagram of a partial structure of the charging case shown in FIG. 13; and
FIG. 19 is a diagram of an exploded structure of a partial structure of the charging case shown in FIG. 11.

### DESCRIPTION OF EMBODIMENTS

The following describes technical solutions of embodiments of this application with reference to accompanying drawings. In the descriptions of embodiments of this application, unless otherwise stated, "/" represents "or". For example, A/B may represent A or B. In this specification, "and/or" merely describes an association relationship between associated objects, and represents that three relationships may exist. For example, A and/or B may represent the following three cases: Only A exists, both A and B exist, and only B exists. In addition, in the descriptions of embodiments of this application, "a plurality of" means two or more.

In the following, terms such as "first" and "second" are used only for description purposes, and cannot be understood as an indication or implication of relative importance or an implicit indication of a quantity of indicated technical features. Therefore, a feature limited by "first" or "second" may explicitly or implicitly include one or more features.

The orientation terms such as "front", "rear", "left", "right", "inner", "outer", "side", "top", "bottom", "upper", and "lower" in embodiments of this application are merely directions described with reference to the accompanying drawings. Therefore, the orientation terms are used to better and more clearly describe and understand embodiments of this application, instead of indicating or implying that a specified apparatus or element needs to have a specific orientation, or be constructed and operated in a specific orientation. Therefore, this cannot be understood as a limitation on embodiments of this application.

In the descriptions of embodiments of this application, it should be noted that unless otherwise explicitly specified and limited, the terms "mounted", "connected", "connection", and "disposed on..." should be understood in a broad sense. For example, a "connection" may be a detachable connection, a non-detachable connection, a direct connection, or an indirect connection implemented through an intermediate medium. A "fixed connection" means that two parts are connected to each other and a relative position relationship remains unchanged after the two parts are connected. An "electrical connection" means that an electrical signal may be conducted between each other.

This application provides an earphone assembly. The earphone assembly includes a charging case and an earphone. The charging case is configured to accommodate the earphone. The charging case may also be referred to as a charging compartment or an earphone case. The charging case includes a battery that can charge the earphone accommodated in the case, to meet a long-term use requirement of a user.

### Overall appearance and parting of an earphone:

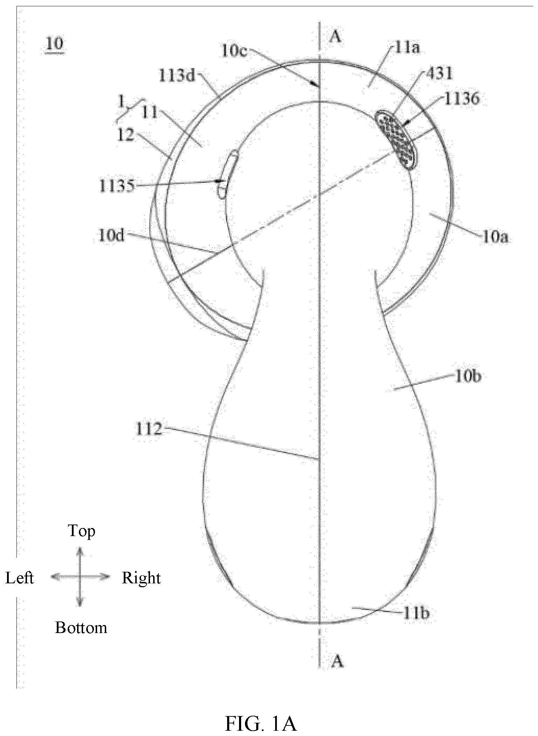

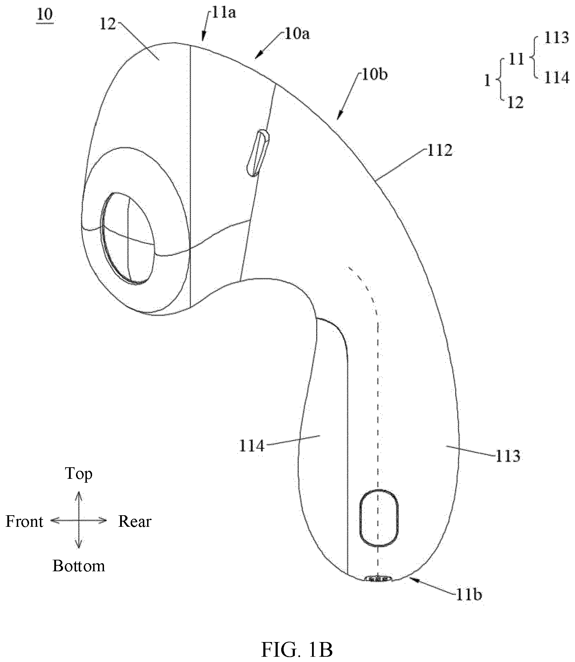

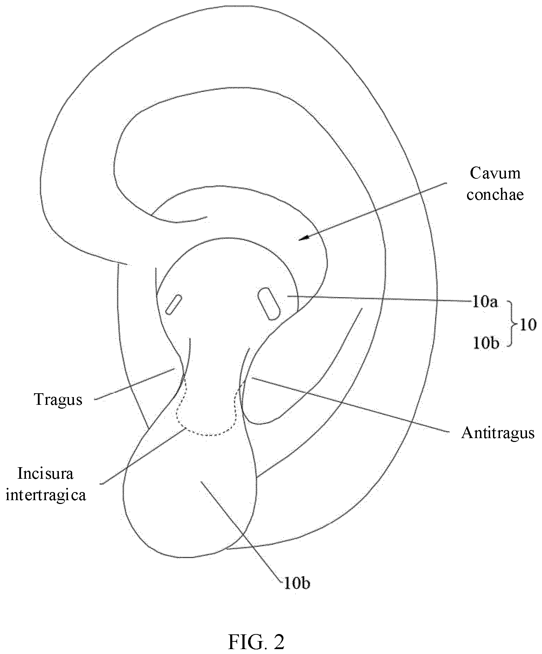

Refer to FIG. 1A, FIG. 1B, and FIG. 2. FIG. 1A is a rear view of an earphone 10 in some embodiments according to this application, FIG. 1B is a left view of the earphone 10 shown in FIG. 1A, and FIG. 2 is a diagram of a structure of the earphone 10 shown in FIG. 1A in some use scenarios.

This application provides an earphone 10. The earphone 10 is a wireless earphone, for example, may be a TWS (True Wireless Stereo, true wireless stereo) earphone. For ease of description in the following, it is defined as follows: The earphone 10 has relative orientations "top" and "bottom", which correspond to a height direction of the earphone 10; the earphone 10 has relative orientations "left" and "right", which correspond to a width direction of the earphone 10; and the earphone 10 has relative orientations "front" and "rear", which correspond to a thickness direction of the earphone 10. In descriptions of some embodiments, an orientation "upper" corresponds to the orientation "top", and an orientation "lower" corresponds to the orientation "bottom".

The earphone 10 includes an earbud 10a and a stem 10b. The stem 10b may also be referred to as a handle, and a top part of the stem 10b is connected to a rear side of the earbud 10a. An outer surface of the earphone 10 is a geometric curved surface that implements a smooth transition. In a direction from an end connected to the earbud 10a to an end that is far away from the earbud 10a, an outer contour of the stem 10b is in a form of first shrinking, then expanding, and then shrinking, and the stem 10b is as round and natural as a freely falling water drop. For example, the earphone 10 may have a central surface 10c, and a central axis 10d of the earbud 10a may be inclined to the central surface 10c. When the earphone 10 is used as a left earphone, a bottom end of the central axis 10d of the earbud 10a may be deflected to the left relative to the central surface 10c, and a top end of the central axis 10d of the earbud 10a may be deflected to the right relative to the central surface 10c. When the earphone 10 is used as a right earphone, a bottom end of the central axis 10d of the earbud 10a may be deflected to the right relative to the central surface 10c, and a top end of the central axis 10d of the earbud 10a may be deflected to the left relative to the central surface 10c. For example, the outer contour of the stem 10b may be symmetrically disposed relative to the central surface 10c.

When the earphone 10 is worn on an ear of a consumer, a front side of the earphone 10 faces the ear, and a rear side of the earphone 10 faces away from the ear. The front side of the earphone 10 is mostly an invisible region, and the rear side of the earphone 10 is mostly a visible region. The earbud 10a of the earphone 10 is inserted into the cavum conchae of the ear, the top part of the stem 10b is located in the cavum conchae, and a bottom part of the stem 10b is located outside the cavum conchae. The tragus, incisura intertragica, and antitragus of the ear may just surround a shrinking part of the stem 10b, to clamp the shrinking part of the stem 10b, so that wearing stability of the earphone 10 is improved, and wearing comfort can be considered, to improve user experience.

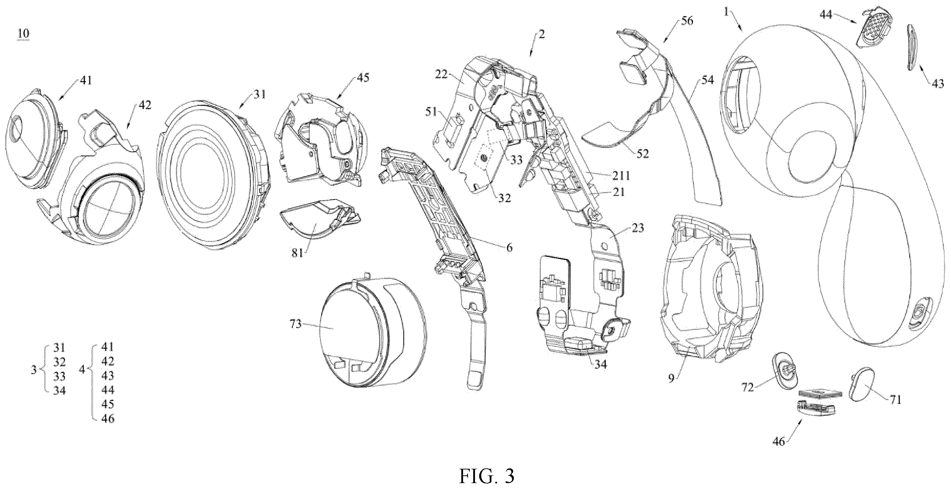

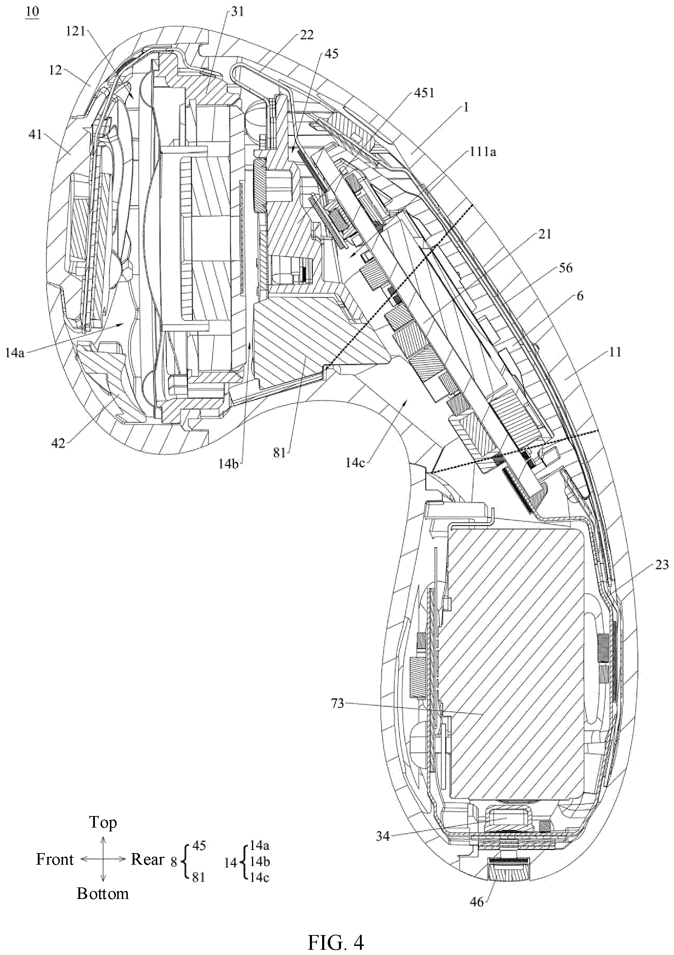

Refer to FIG. 3 and FIG. 4. FIG. 3 is a diagram of a partial exploded structure of the earphone 10 shown in FIG. 1A, and FIG. 4 is a diagram of a cross-sectional structure that is of the earphone 10 shown in FIG. 1A and that is taken along A-A. A-A corresponds to the central surface 10c of the earphone 10.

In some embodiments, the earphone 10 includes a housing 1 and a plurality of assemblies mounted in the housing 1. The plurality of assemblies include but are not limited to a circuit assembly 2, an audio assembly 3, an audio auxiliary assembly 4, a detection assembly 5, an antenna 6, a first contact 71, a second contact 72, a battery 73, and a magnetic attraction member 81.

For example, the circuit assembly 2 may include a main circuit board 21, a first flexible circuit board 22, and a second flexible circuit board 23. A plurality of components may be fastened on each circuit board. For example, a main control chip 211 may be arranged on the main circuit board 21, and the main control chip 211 may be a system on chip (System on Chip, SoC). A plurality of circuits may be integrated into the main control chip 211. One end of the first flexible circuit board 22 is electrically connected to the main circuit board 21, and one end of the second flexible circuit board 23 is electrically connected to the main circuit board 21, to implement electrical connections between components on the circuit boards. The circuit assembly 2 is electrically connected to another functional component, module, and the like of the earphone 10.

For example, the audio assembly 3 may include a speaker 31 and a plurality of microphones, to implement sound playing and sound pickup. The speaker 31 may also be referred to as a "horn", and is configured to convert an audio electrical signal into a sound signal. The microphone is configured to convert a sound signal into an electrical signal, and is mainly configured to: collect a sound outside the earphone 10, convert the sound into an electrical signal, and transmit the electrical signal to the main control chip 211 for processing, to implement functions such as active noise reduction, a voice call, call noise reduction, an ambient sound mode, and voice assistant wakeup of the earphone 10.

The plurality of microphones may include a first microphone 32, a second microphone 33, and a third microphone 34. In this application, the first microphone 32 and the second microphone 33 in the audio assembly 3 of the earphone 10 are used in an active noise cancelling (Active Noise Cancelling, ANC) design system. Active noise cancelling is a method for identifying an unwanted sound source as noise, and a design of eliminating original noise by generating an "anti-noise" signal, to eliminate noise in real time. The second microphone 33 may be an FF (Feedforward topology, feedforward topology) microphone. The FF microphone is a reference microphone facing an outside of a user ear, and is configured to sense a main noise signal that may be used as a reference signal of a forward active noise cancelling filter. The first microphone 32 may be an FB (Feedback Topology, feedback topology) microphone. The FB microphone is an error microphone, and is configured to collect, as a reference signal of a feedback active noise cancelling filter, a signal entering the user ear. The third microphone 34 may be a call microphone.

For example, the audio auxiliary assembly 4 is configured to provide a plurality of channels, to assist the audio assembly 3 in implementing sound playing, sound pickup, and the like. The audio auxiliary assembly 4 may include a first assembly 41, a second assembly 42, a third assembly 43, a fourth assembly 44, a fifth assembly 45, and a sixth assembly 46. The plurality of assemblies are mounted at different positions of the housing 1, and are configured to provide corresponding channels for a plurality of parts in the audio assembly 3.

For example, the detection assembly 5 includes a plurality of sensors. The plurality of sensors may include a proximity sensor 51, a wearing detection sensor 52, a Hall sensor (Hall sensor) (not shown in the figure), a touch sensor 54, a gravity sensor (g-sensor) (not shown in the figure), and the like. The proximity sensor 51 and the wearing detection sensor 52 are configured to implement wearing detection of the earphone 10. The Hall sensor is configured to implement in-case presence detection of the earphone 10. The touch sensor 54 is configured to detect a touch action of a user. The gravity sensor is configured to detect a posture change of the earphone 10. The touch sensor 54 and the gravity sensor are configured to improve man-machine interaction experience of the earphone 10. The wearing detection sensor 52 and the touch sensor 54 may be capacitive sensors (cap sensors). The detection assembly 5 may include a detection circuit board 56. The detection circuit board 56 forms the wearing detection sensor 52 and the touch sensor 54.

In some use scenarios, the earphone 10 may determine, by using a wearing detection function, whether the user wears/takes off the earphone 10, to automatically play/pause music. In some other use scenarios, if the user takes off the earphone 10, does not wear the earphone 10 for a long time, and does not put the earphone 10 back into a charging case, the earphone 10 automatically sleeps/powers off, to save power. In some other use scenarios, to improve experience of single/dual-ear use of the earphone 10, when two earphones 10 are worn, both the two earphones 10 play music, and when one earphone 10 is taken off and the other earphone 10 is worn, the earphone 10 that is not being worn stops playing music, and the earphone 10 that is being worn continues to play, to implement seamless switching.

In some use scenarios, the earphone 10 may detect different touch actions or operation actions of the user by using a man-machine interaction function, to implement functions such as music playing/pause, music switching, volume adjustment, and intelligent voice wakeup of the earphone 10. In this way, during use, the earphone 10 may be disconnected, to some extent, from a terminal (a mobile phone, a tablet, or the like) connected to the earphone 10, and an operation is more convenient and quick, to help improve user experience.

For example, the antenna 6 is configured to implement wireless communication between the earphone 10 and another terminal (for example, a mobile phone, a tablet, or the like). The battery 73 is configured to supply power to the earphone 10. The first contact 71 and the second contact 72 are configured to: when the earphone 10 is accommodated in the charging case, implement communication with the charging case, and implement a process of charging the earphone 10 by the charging case. The magnetic attraction member 81 is configured to form magnetic attraction force with the charging case when the earphone 10 is placed in the case, so that the earphone 10 is stably placed in the charging case.

In some other embodiments of this application, the earphone 10 may include more or fewer parts than those in the foregoing embodiment, some parts may be combined, some parts may be split, or different part arrangements may be used. The parts of the earphone 10 may be implemented by hardware, software, or a combination of software and hardware.

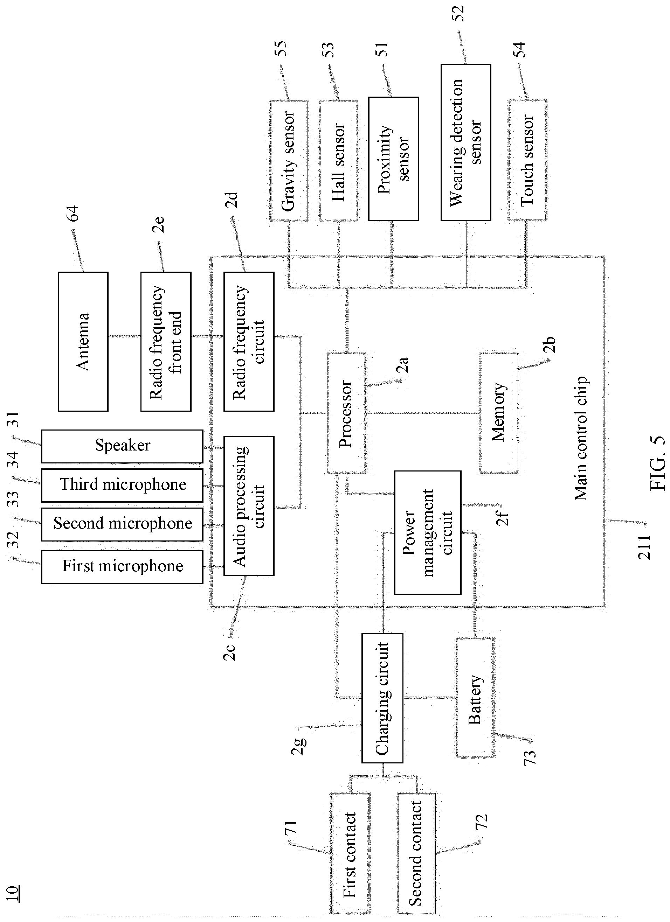

Refer to FIG. 5. FIG. 5 is a block diagram of some circuits of the earphone 10 shown in FIG. 1A.

In some embodiments, the earphone 10 may include a processor 2a, a memory 2b, an audio processing circuit 2c, a radio frequency circuit 2d, a radio frequency front end 2e, a power management circuit 2f, a charging circuit 2g, and the like. The processor 2a is electrically connected to the memory 2b.

All of the speaker 31, the first microphone 32, the second microphone 33, and the third microphone 34 are electrically connected to the audio processing circuit 2c, and the audio processing circuit 2c is electrically connected to the processor 2a. The audio processing circuit 2c is configured to convert digital audio information into an analog audio signal for output, and is further configured to convert an analog audio input into a digital audio signal. The audio processing circuit 2c may be further configured to encode and decode an audio signal. In some embodiments, the audio processing circuit 2c may alternatively be disposed in the processor 2a, or some functional modules of the audio processing circuit 2c are disposed in the processor 2a.

The antenna 6 is connected to the radio frequency front end 2e, the radio frequency front end 2e is connected to the radio frequency circuit 2d, and the radio frequency circuit 2d is connected to the processor 2a. The radio frequency circuit 2d is configured to modulate a radio frequency signal or demodulate a radio frequency signal. The radio frequency front end 2e is configured to filter and amplify the radio frequency signal. The radio frequency front end 2e may include one or more of a power amplifier (Power Amplifier, PA), a filter, a switch (Switch), and a low noise amplifier (LNA, Low Noise Amplifier). The filter may be a surface acoustic wave (surface acoustic wave, SAW) filter.

The first contact 71 and the second contact 72 are electrically connected to the charging circuit 2g, and the charging circuit 2g is electrically connected to the processor 2a, the power management circuit 2f, and the battery 73. The charging circuit 2g is configured to receive a charging input through the first contact 71 and the second contact 72. The power management circuit 2f is electrically connected to the processor 2a. The power management circuit 2f receives an input from the battery 73 and/or the charging circuit 2g, and supplies power to the processor 2a, the memory 2b, and other parts. In some other embodiments, the power management circuit 2f may alternatively be disposed in the processor 2a. In some other embodiments, the power management circuit 2f and the charging circuit 2g may alternatively be disposed in a same component.

All of the proximity sensor 51, the wearing detection sensor 52, the Hall sensor 53, the touch sensor 54, and the gravity sensor 55 are electrically connected to the processor 2a.

The processor 2a, the memory 2b, the audio processing circuit 2c, the radio frequency circuit 2d, and the power management circuit 2f may be integrated into the main control chip 211. The radio frequency front end 2e and the charging circuit 2g may be respectively formed in other chips. In some other embodiments, the foregoing circuit may have another implementation structure. For example, more or fewer circuits may be integrated into the main control chip 211. For example, the radio frequency circuit 2d may be independent of the main control chip 211 and implemented by a radio frequency chip. This is not strictly limited in this embodiment of this application.

### Housing 1 of the earphone 10:

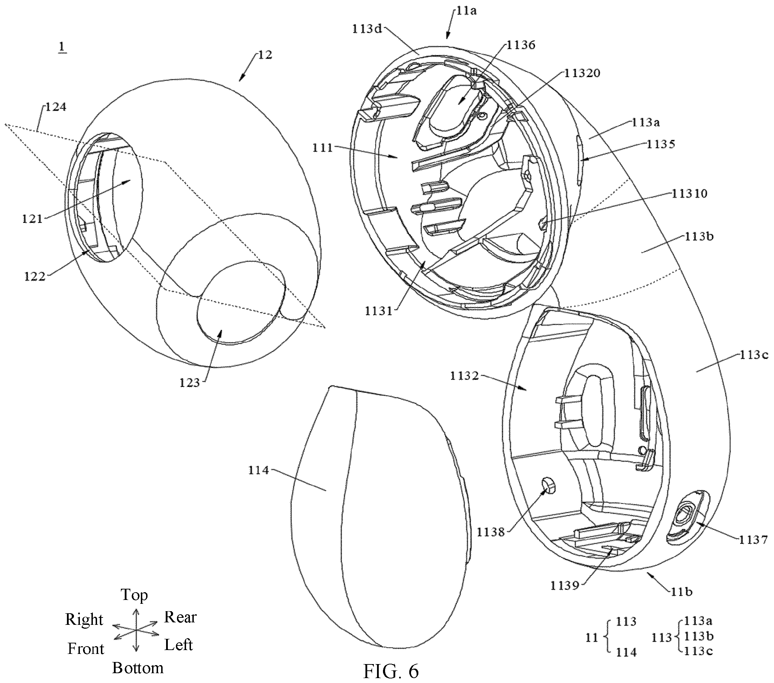

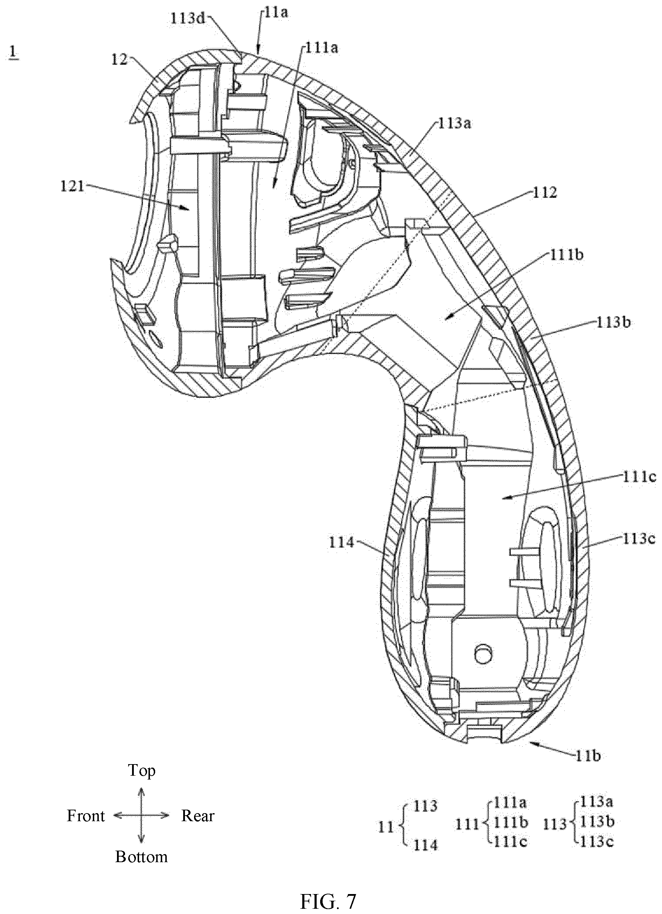

Refer to FIG. 1A, FIG. 1B, FIG. 6, and FIG. 7. FIG. 6 is a diagram of an exploded structure of the housing 1 shown in FIG. 3, and FIG. 7 is a diagram of an internal structure of the housing 1 shown in FIG. 3.

In some embodiments, the housing 1 includes a main housing 11 and a front housing 12, the front housing 12 is fastened on a front side of the main housing 11, and internal space 121 of the front housing 12 communicates with internal space 111 of the main housing 11. When the earphone 10 is being worn, the front housing 12 faces a user ear. Specifically, the front housing 12 may be located in the cavum conchae, be in contact with the cavum conchae, and face an ear canal of the user ear. The front housing 12 and a partial structure that is of the main housing 11 and that is connected to the front housing 12 form a housing of the earbud 10a of the earphone 10, and the other partial structure of the main housing 11 forms a housing of the stem 10b of the earphone 10.

The main housing 11 includes a first end 11a and a second end 11b. The first end 11a of the main housing 11 is close to the front housing 12, and is in contact with the front housing 12, and the second end 11b of the main housing 11 is far away from the front housing 12. The main housing 11 has a dorsal line 112, and the dorsal line 112 extends from the first end 11a of the main housing 11 to the second end 11b of the main housing 11. The dorsal line 112 is located on a rear side of the main housing 11, and the dorsal line 112 is located on the central surface 10c of the earphone 10. The dorsal line 112 is a smooth curve. As shown in FIG. 1B, when the earphone 10 is in a left view, a contour line of a side (that is, a side facing away from the front housing 12) that is of the main housing 11 and that faces backward corresponds to the dorsal line 112. The dorsal line 112 may be a solid line, or may be a non-solid line. This is not strictly limited in this embodiment of this application.

For example, in a direction from the first end 11a of the main housing 11 to the second end 11b of the main housing 11, an outer contour of the main housing 11 first shrinks and then expands. A case in which the outer contour of the main housing 11 first shrinks and then expands includes a first case in which the outer contour of the main housing 11 first shrinks, then expands, and then shrinks, and a second case in which the outer contour of the main housing 11 first shrinks and then expands.

For the first case, in the direction from the first end 11a of the main housing 11 to the second end 11b of the main housing 11, a part that is of the main housing 11 and that is located on the earbud 10a is in a shrinking form, and a part that is of the main housing 11 and that is located on the stem 10b is in a form of first shrinking, then expanding, and then shrinking, and at a bottom part of the main housing 11, a bottom end face may be formed by an arc-shaped surface or an approximately arc-shaped surface, to have a rounded form. In this case, a shape of the main housing 11 is designed, so that the stem 10b of the earphone 10 can have a shape similar to that of a "freely falling water drop".

For the second case, in the direction from the first end 11a of the main housing 11 to the second end 11b of the main housing 11, a part that is of the main housing 11 and that is located on the earbud 10a is in a shrinking form, and a part that is of the main housing 11 and that is located on the stem 10b first shrinks and then expands, that is, at a bottom part of the main housing 11, a bottom end face may be formed by a plane or an approximate plane. In the second case, a small rounded transition region connected to the bottom end face may exist at the bottom part of the main housing 11, and a form change of this part of transition region is small and may be ignored.

For example, as shown in FIG. 7, the internal space 111 of the main housing 11 includes top space 111a, middle space 111b, and bottom space 111c that sequentially communicate with each other, the top space 111a of the main housing 11 is close to the first end 11a of the main housing 11, and the bottom space 111c of the main housing 11 is close to the second end 11b of the main housing 11. The top space 111a of the main housing 11 is connected to the internal space 121 of the front housing 12. In the direction from the first end 11a of the main housing 11 to the second end 11b of the main housing 11, the internal space 111 of the main housing 11 first shrinks and then expands. A cross-sectional area of the top space 111a of the main housing 11 is basically greater than a cross-sectional area of the middle space 111b of the main housing 11, and a cross-sectional area of the bottom space 111c of the main housing 11 is basically greater than the cross-sectional area of the middle space 111b of the main housing 11. That is, a narrowest position in the internal space 111 of the main housing 11 is located in the middle space 111b of the main housing 11. In this embodiment, the main housing 11 is of a housing member structure, and a form change of the internal space 111 of the main housing 11 is the same as or similar to a form change of the outer contour of the main housing 11.

It may be understood that in the accompanying drawings of this embodiment of this application, division positions of the top space 111a, the middle space 111b, and the bottom space 111c of the main housing 11 are example positions, and are not strict and unique position division. In an overall design of the earphone 10, a requirement that the internal space 111 of the main housing 11 shrinks to the narrowest in the middle space 111b needs to be met, and the division positions of the top space 111a, the middle space 111b, and the bottom space 111c of the main housing 11 may be adaptively changed based on an actual situation.

For example, when the dorsal line 112 extends from the first end 11a of the main housing 11 to the second end 11b of the main housing 11, the dorsal line 112 first extends backward and then extends forward. A part that is of the main housing 11 and that corresponds to a line segment that extends backward and that is of the dorsal line 112 is in a form of first shrinking and then expanding. A part that is of the main housing 11 and that corresponds to a line segment that extends forward and that is of the dorsal line 112 is in a shrinking form. In this embodiment, a shape of the dorsal line 112 is set, so that a back of the earphone 10 is in a form that implements free sliding, and an overall form of the earphone 10 is natural and beautiful.

The dorsal line 112 may include a plurality of smoothly connected arc-shaped line segments. In an extension direction of the dorsal line 112, radii of the plurality of arc-shaped line segments first increase and then decrease. An arc-shaped line segment with a largest radius may be disposed to correspond to the middle space 111b of the main housing 11.

In some embodiments, as shown in FIG. 1B, FIG. 6, and FIG. 7, the main housing 11 includes a main housing member 113 and a sealing cover member 114. The main housing member 113 has a first opening 1131 and a second opening 1132 that are disposed at an interval, and both the first opening 1131 and the second opening 1132 are disposed to face forward. That is, when the earphone 10 is being worn, both the first opening 1131 and the second opening 1132 face the user ear. The main housing member 113 includes a top part 113a, a middle part 113b, and a bottom part 113c that are sequentially connected. The first opening 1131 is formed at the top part 113a of the main housing member 113, and the second opening 1132 is formed at the bottom part 113c of the main housing member 113. The front housing 12 is mounted at the first opening 1131, the sealing cover member 114 is mounted at the second opening 1132, and the sealing cover member 114 is located on a front side of the bottom part 113c of the main housing member 113. As shown in FIG. 7, inner side space of the top part 113a of the main housing member 113 forms the top space 111a of the main housing 11, inner side space of the middle part 113b of the main housing member 113 forms the middle space 111b of the main housing 11, and the sealing cover member 114 and a part (that is, the bottom part 113c of the main housing member 113) of the main housing member 113 jointly enclose the bottom space 111c of the main housing 11. The main housing member 113 may be an integrally formed structural member. For example, the main housing member 113 may be formed by using an injection molding process.

In this embodiment, the housing 1 mainly includes three housing members: the front housing 12, the main housing member 113, and the sealing cover member 114. The housing 1 includes such a few housing members that require no complex structure and are easy to assemble. In addition, the middle part 113b of the main housing member 113 is of a complete housing member structure, and no opening is disposed. This helps improve structural strength of the main housing member 113, so that overall structural strength of the main housing 11 and the housing 1 is high.

For example, with reference to FIG. 1A, FIG. 6, and FIG. 7, the main housing 11 includes an abutting end face 113d, the abutting end face 113d is located on the main housing member 113 and is disposed around the first opening 1131, and the abutting end face 113d is in contact with the front housing 12. A plane on which the abutting end face 113d is located is perpendicular to the central surface 10c of the earphone 10. The main housing member 113 has a first projection on the plane on which the abutting end face 113d is located, the sealing cover member 114 has a second projection on the plane on which the abutting end face 113d is located, and the first projection covers the second projection.

A surface of the earphone 10 in a rear view is a primary appearance surface, that is, in a case of viewing from back to front, an exposed surface of the earphone 10 is the primary appearance surface. A surface of the earphone 10 in a front view is a secondary appearance surface, that is, in a case of viewing from front to back, an exposed surface of the earphone 10 is the primary appearance surface. When the earphone 10 is being worn, the secondary appearance surface faces the user ear and is hidden, and the primary appearance surface faces away from the user ear and is exposed. The main housing member 113 is projected from back to front to form the first projection, and the sealing cover member 114 is projected from back to front to form the second projection. The first projection covers the second projection. Therefore, in the rear view of the earphone 10, the main housing member 113 blocks the sealing cover member 114, and a parting line between the sealing cover member 114 and the main housing member 113 is hidden on the secondary appearance surface of the earphone 10, so that the primary appearance surface of the earphone 10 is complete, to maintain good visual integrity. The parting line between the sealing cover member 114 and the main housing member 113 is a line formed on the appearance surface of the earphone 10 at a junction of the sealing cover member 114 and the main housing member 113. A maximum contour line of the main housing member 113 in a left-right direction is shown by a dashed line in FIG. 1B, and the parting line between the sealing cover member 114 and the main housing member 113 is located on a front side of the maximum contour line.

In some embodiments, an overall height of the earphone 10 may range from 35 mm to 45 mm, for example, 38 mm, 39.56 mm, 41.5 mm, 43.21 mm, or the like. An overall width of the earphone 10 may range from 19 mm to 26 mm, for example, 21 mm, 22.83 mm, 24.5 mm, or the like. An overall height of the main housing member 113 may range from 35 mm to 45 mm, for example, 37 mm, 39.38 mm, 41.2 mm, 42.8 mm, or the like. A thickness at a thickest position of the bottom part 113c of the main housing member 113 may range from 8 mm to 12 mm, for example, 8.2 mm, 9 mm, 9.74 mm, 10.11 mm, 10.53 mm, or the like. A width at a widest position of the bottom part 113c of the main housing member 113 may range from 11 mm to 16 mm, for example, 12 mm, 12.8 mm, 13.53 mm, 14.2 mm, or the like. A thickness at a narrowest position of the main housing member 113 in a front-rear direction may range from 6 mm to 8.5 mm, for example, 6.5 mm, 7.2 mm, 7.4 mm, or the like. A width at a narrowest position of the main housing member 113 in the left-right direction ranges from 5 mm to 8.5 mm, for example, 6.47 mm or the like. A spacing between the sealing cover member 114 and the front housing 12 may range from 5 mm to 8 mm, for example, 5.7 mm, 6 mm, 6.54 mm, 7.12 mm, or the like. An included angle between the central axis 10d of the earbud 10a and the central surface 10c may range from 50° to 70°, for example, 55°, 60°, 67°, or the like. An included angle between the abutting end face 113d of the main housing member 113 and a boundary line between the earbud 10a and the stem 10b may range from 7° to 10°, for example, 7.6°, 8.4°, 9.2°, or the like. In some other embodiments, one or more of the foregoing dimensions of the earphone 10 may be adjusted as required.

It may be understood that the foregoing descriptions of the structure of the housing 1 are merely example descriptions. In some other embodiments, the housing 1 may alternatively have another structure. This is not strictly limited in this application.

In the foregoing embodiment, the earphone 10 has ultimate space utilization and matches a brand new appearance. This can not only meet requirements of the user for product exquisiteness, wearing comfort, and a brand new appearance, but also meet requirements of the user for sound quality, noise reduction, and battery life extension of the wireless earphone 10.

### Charging case:

Regular horizontal display surfaces are used for an upper cover and a lower cover of a conventional charging case, and an earphone is vertically placed in the charging case. A process of taking out the earphone from the charging case is affected by an exposed height of the earphone, magnetic attraction force of the earphone, and a form of the earphone, which becomes a major disadvantage in a use process of a user. For example, to meet a requirement for magnetic attraction force required for placing the earphone in the case, a specific magnetic attraction force requirement needs to be met between the earphone and the charging case. Therefore, convenience of taking out the earphone is severely affected, and user experience is poor. To improve the convenience of taking out the earphone, the magnetic attraction force usually needs to be strictly controlled in a production line, resulting in an increase in costs of an earphone assembly. In addition, in the conventional earphone assembly, an excessively small part of the earphone is exposed to the charging case, and a region that can be held by the user is small. Consequently, it is difficult for the user to take out the earphone.

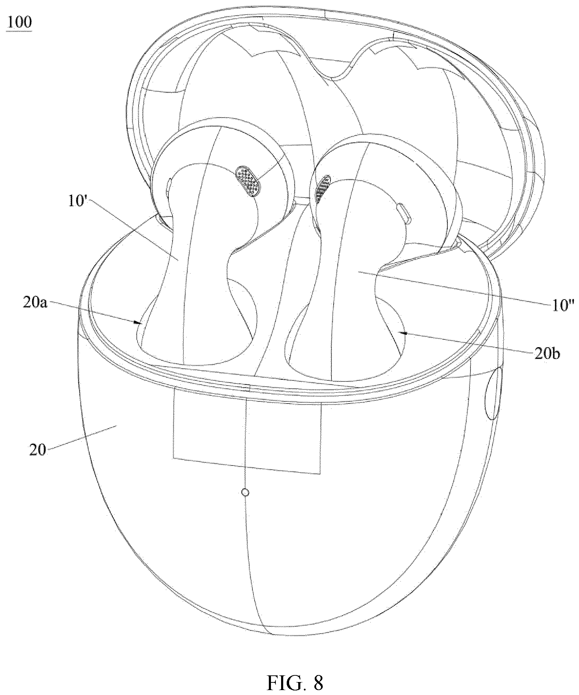

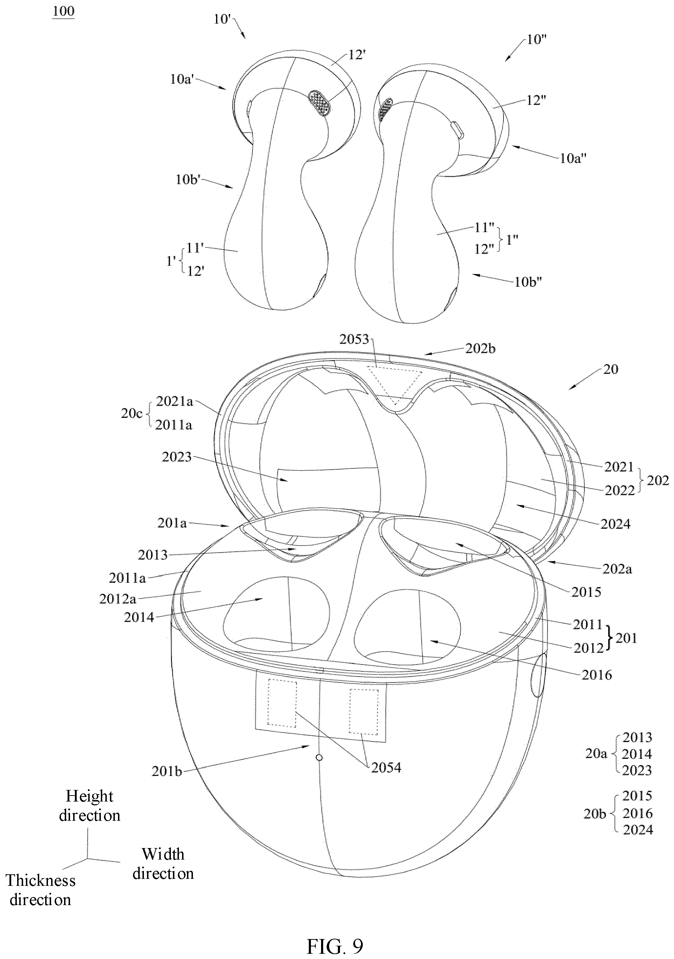

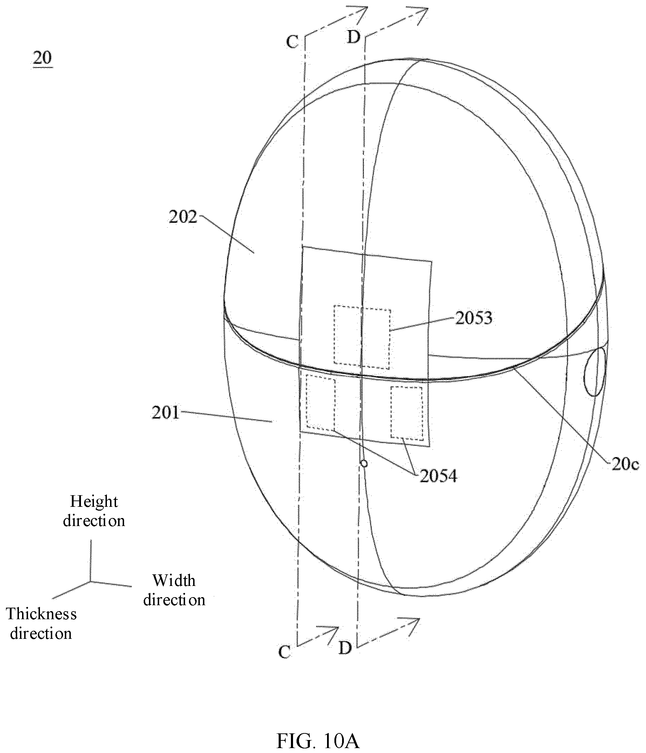

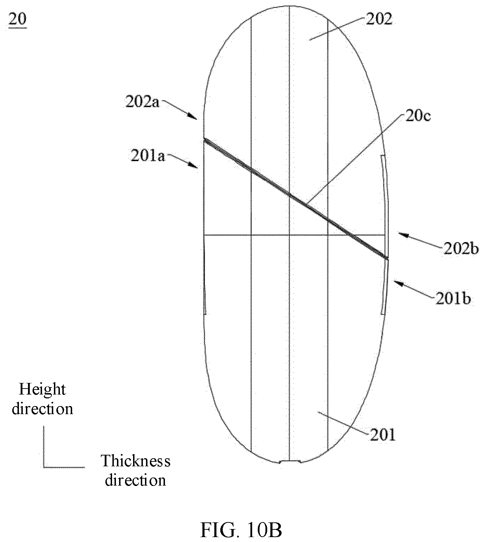

Refer to FIG. 8, FIG. 9, FIG. 10A, and FIG. 10B. FIG. 8 is a diagram of a structure of an earphone assembly 100 in some embodiments according to an embodiment of this application, FIG. 9 is a diagram of a structure of the earphone assembly 100 shown in FIG. 8 in another use state, FIG. 10A is a diagram of a structure of a charging case 20 of the earphone assembly 100 shown in FIG. 9 in another use state, and FIG. 10B is a diagram of a structure of the charging case 20 shown in FIG. 10A at another angle.

In some embodiments, the earphone assembly 100 includes a charging case 20, a first earphone 10', and a second earphone 10". The charging case 20 has a first earphone slot 20a and a second earphone slot 20b that are disposed at an interval. The first earphone slot 20a and the second earphone slot 20b are configured to accommodate the earphones. The first earphone 10' can be detachably accommodated in the first earphone slot 20a, and the second earphone 10" can be detachably accommodated in the second earphone slot 20b. In the first earphone 10' and the second earphone 10", one is a left earphone, and the other is a right earphone. In this embodiment, an example in which the first earphone 10' is the left earphone and the second earphone 10" is the right earphone is used for description. In some other embodiments, the first earphone 10' and the second earphone 10" may be interchanged. Both the first earphone 10' and the second earphone 10" use all or most of the structures of the earphone in the foregoing embodiments.

A housing 1' of the first earphone 10' and a housing 1" of the second earphone 10" are of mutually symmetric structures, and the first earphone slot 20a and the second earphone slot 20b are of mutually symmetric structures. The housing 1' of the first earphone 10' is of an asymmetric structure, the first earphone slot 20a is of an asymmetric structure, and a shape of the first earphone slot 20a is the same as a shape of the housing 1' of the first earphone 10'. The housing 1" of the second earphone 10" is of an asymmetric structure, the second earphone slot 20b is of an asymmetric structure, and a shape of the second earphone slot 20b is the same as a shape of the housing 1" of the second earphone 10". Briefly, the first earphone slot 20a is adapted to the first earphone 10', and the second earphone slot 20b is adapted to the second earphone 10". In some examples, when the first earphone 10' is placed in the first earphone slot 20a and the second earphone 10" is placed in the second earphone slot 20b, the two earphones are correctly placed, and the charging case 20 may be closed, or when the first earphone 10' is placed in the second earphone slot 20b and the second earphone 10" is placed in the first earphone slot 20a, the two earphones are incorrectly placed, and the charging case 20 cannot be closed.

For example, the charging case 20 has a width direction, a thickness direction, and a height direction that are perpendicular to each other, the first earphone slot 20a and the second earphone slot 20b are arranged in the width direction of the charging case 20, and a dimension of the charging case 20 in the height direction is greater than a dimension of the charging case 20 in the thickness direction. The charging case 20 includes a case body 201 and a case cover 202, and the case cover 202 is rotatably connected to the case body 201.

For example, as shown in FIG. 10B, the case body 201 has a first end 201a and a second end 201b that are disposed opposite to each other, and the case cover 202 has a first end 202a and a second end 202b that are disposed opposite to each other. The first end 202a of the case cover 202 is rotatably connected to the first end 201a of the case body 201, and a rotation center is parallel to the width direction of the charging case 20. The second end 202b of the case cover 202 is far away from the second end 201b of the case body 201, to open the case cover 202 relative to the case body 201, or the second end 202b of the case cover 202 is close to the second end 201b of the case body 201, to close the case cover 202 relative to the case body 201. The first end 201a of the case body 201 is higher than the second end 201b of the case body 201. That is, in the height direction of the charging case 20, a dimension of the first end 201a of the case body 201 is greater than a dimension of the second end 201b of the case body 201. In this case, an entire top part of the case body 201 is inclined.

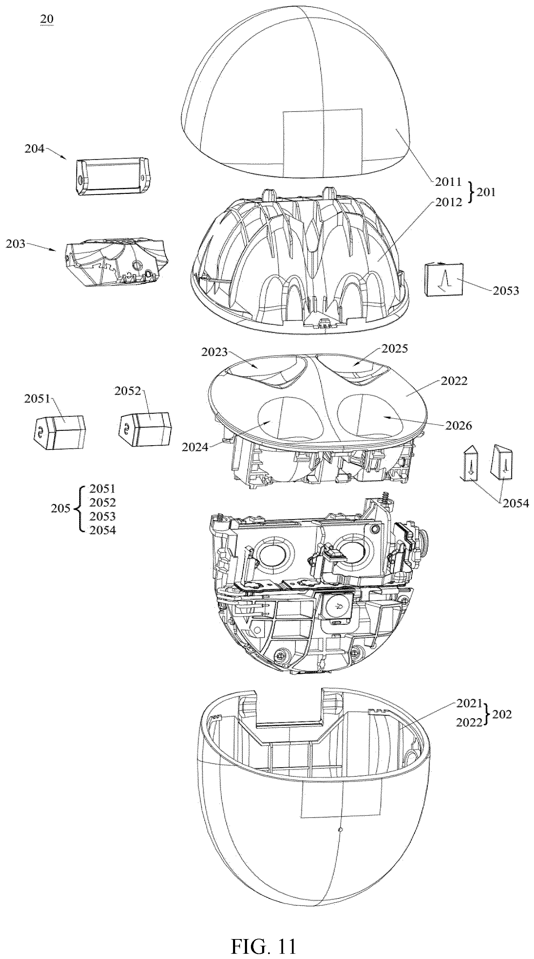

Refer to FIG. 9 and FIG. 11. FIG. 11 is a diagram of a partial exploded structure of the charging case 20 shown in FIG. 9.

In some embodiments, the case body 201 includes a case body housing 2011 and a case body lining 2012, and the case body lining 2012 is fastened on an inner side of the case body housing 2011; and the case cover 202 includes a case cover housing 2021 and a case cover lining 2022, and the case cover lining 2022 is fastened on an inner side of the case cover housing 2021. Both the first earphone slot 20a and the second earphone slot 20b are partially formed on the case body lining 2012 and partially formed on the case cover lining 2022.

With reference to FIG. 9 to FIG. 10B again, the case body 201 includes a top surface facing the case cover 202, and the top surface of the case body 201 includes a top surface 2011a of the case body housing 2011 and a top surface 2012a of the case body lining 2012; and the case cover 202 includes a bottom surface facing the case body 201, and the bottom surface of the case cover 202 includes a bottom surface 2021a of the case cover housing 2021 and a bottom surface of the case cover lining 2022. When the charging case 20 is closed, the top surface of the case body 201 is opposite to the bottom surface of the case cover 202, the top surface 2011a of the case body housing 2011 is opposite to the bottom surface 2021a of the case cover housing 2021, and the top surface 2012a of the case body lining 2012 is opposite to the bottom surface of the case cover lining 2022.

A connection between the top surface 2011a of the case body housing 2011 and the bottom surface 2021a of the case cover housing 2021 may be seen from an outside of the charging case 20, to form a parting surface 20c of the charging case 20. That is, the parting surface 20c of the charging case 20 includes the top surface 2011a of the case body housing 2011 and the bottom surface 2021a of the case cover housing 2021. The parting surface 20c of the charging case 20 is inclined to the thickness direction of the charging case 20 and inclined to the height direction of the charging case 20.

The top surface 2011a of the case body housing 2011 may be a plane, and the bottom surface 2021a of the case cover housing 2021 may be a plane, so that processing difficulty of the case body housing 2011 and the case cover housing 2021 is reduced, and the case body housing 2011 and the case cover housing 2021 are easily closed, and the parting surface 20c of the charging case 20 is a plane. In this case, an appearance of the charging case 20 is exquisite and concise. In some other embodiments, the parting surface of the charging case 20 may alternatively be a curved surface. This is not strictly limited in this embodiment of this application.

When the charging case 20 is opened, the first earphone 10' and the second earphone 10" are placed on the case body lining 2012, the first earphone 10' and the second earphone 10" are exposed relative to the top surface 2012a of the case body lining 2012, and the top surface 2012a of the case body lining 2012 forms a display surface of the charging case 20.

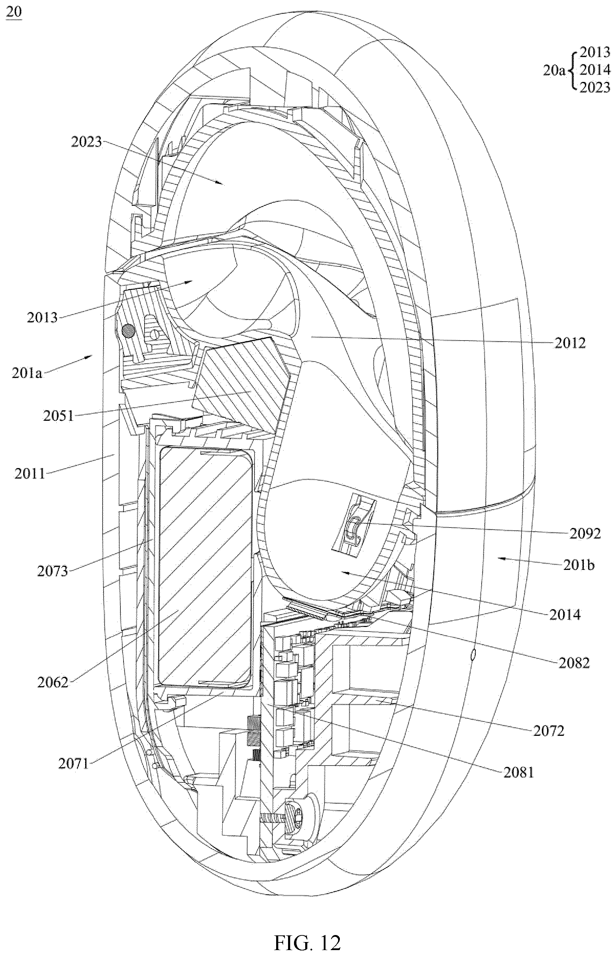

Refer to FIG. 9, FIG. 11, and FIG. 12. FIG. 12 is a diagram of a cross-sectional structure of FIG. 10A along C-C. For ease of illustration, a view in FIG. 12 is obtained by rotating a view in FIG. 10A.

In some embodiments, the first earphone slot 20a includes a first top slot 2013, a first bottom slot 2014, and a first fitting slot 2023, the first top slot 2013 and the first bottom slot 2014 are formed on the case body lining 2012, and the first fitting slot 2023 is formed on the case cover lining 2022. As shown in FIG. 12, when the charging case 20 is closed, the first top slot 2013, the first bottom slot 2014, and the first fitting slot 2023 jointly form the first earphone slot 20a, and the shape of the first earphone slot 20a is adapted to a shape of the first earphone 10'.

As shown in FIG. 9 and FIG. 12, the first top slot 2013 is closer to the first end 201a of the case body 201 than the first bottom slot 2014, a slot depth of the first top slot 2013 is less than a slot depth of the first bottom slot 2014, the first top slot 2013 is configured to accommodate an earbud 10a' of the first earphone 10', and the first bottom slot 2014 is configured to accommodate a stem 10b" of the first earphone 10'. In the first earphone 10', a main housing 11' of the housing 1' includes a first part that is close to a front housing 12' and a second part that is far away from the front housing 12', the front housing 12' and the first part of the main housing 11' form the earbud 10a' of the first earphone 10', and the second part of the main housing 11' forms the stem 10b" of the first earphone 10'.

Both an opening of the first top slot 2013 and an opening of the first bottom slot 2014 are located on the top surface of the case body lining 2012, and the opening of the first bottom slot 2014 is lower than the opening of the first top slot 2013. A lowest edge of the opening of the first top slot 2013 is not lower than a highest edge of the opening of the first bottom slot 2014. In this case, the display surface of the charging case 20 is an inclined surface. When the first earphone 10' is placed in the first earphone slot 20a, a large part of the first earphone 10' is exposed relative to the charging case 20, so that a user can easily take out the earphone, to improve user experience of taking out the earphone from the charging case 20, ensure specific aesthetics, and improve product appearance exquisiteness.

The opening of the first top slot 2013 may be disposed at an interval from the opening of the first bottom slot 2014. In this case, an end that is of the opening of the first bottom slot 2014 and that is close to the opening of the first top slot 2013 is lower than an end that is of the opening of the first top slot 2013 and that is close to the opening of the first bottom slot 2014. In this embodiment, the opening of the first bottom slot 2014 may be significantly lower than the opening of the first top slot 2013, so that when the first earphone 10' is placed in the first earphone slot 20a, a larger part of the first earphone 10' is exposed relative to the charging case 20.

A lowest part of a bottom wall of the first top slot 2013 is not lower than a lowest edge of the opening of the first bottom slot 2014. In this embodiment, when the first earphone 10' is placed in the first earphone slot 20a, a larger part of the first earphone 10' is exposed relative to the charging case 20.

For example, when the first earphone 10' is placed in the first earphone slot 20a, a bottom part of a main housing member of the main housing 11' is located in the first bottom slot 2014, both the front housing 12' and a top part of the main housing member are partially located in the first top slot 2013 and partially located outside the case body 201, and a middle part of the main housing member is located outside the case body 201. For a diagram of a structure and descriptions of the main housing member of the main housing 11', refer to the foregoing related content of the main housing member 113 of the earphone 10.

Similarly, the second earphone slot 20b includes a second top slot 2015, a second bottom slot 2016, and a second fitting slot 2024, the second top slot 2015 and the second bottom slot 2016 are formed on the case body lining 2012, and the second fitting slot 2024 is formed on the case cover lining 2022. When the charging case 20 is closed, the second top slot 2015, the second bottom slot 2016, and the second fitting slot 2024 jointly form the second earphone slot 20b, and the shape of the second earphone slot 20b is adapted to a shape of the second earphone 10".

The second top slot 2015 is closer to the first end 201a of the case body 201 than the second bottom slot 2016, a slot depth of the second top slot 2015 is less than a slot depth of the second bottom slot 2016, the second top slot 2015 is configured to accommodate an earbud 10a" of the second earphone 10", and the second bottom slot 2016 is configured to accommodate a stem 10b" of the second earphone 10". In the second earphone 10", a main housing 11" includes a first part that is close to a front housing 12" and a second part that is far away from the front housing 12", the front housing 12" and the first part of the main housing 11" form the earbud 10a" of the second earphone 10", and the second part of the main housing 11" forms the stem 10b" of the second earphone 10".

Both an opening of the second top slot 2015 and an opening of the second bottom slot 2016 are located on the top surface of the case body lining 2012, and the opening of the second bottom slot 2016 is lower than the opening of the second top slot 2015. A lowest edge of the opening of the second top slot 2015 is not lower than a highest edge of the opening of the second bottom slot 2016. In this case, the display surface of the charging case 20 is an inclined surface. When the second earphone 10" is placed in the second earphone slot 20b, a large part of the second earphone 10" is exposed relative to the charging case 20, so that a user can easily take out the earphone, to improve user experience of taking out the earphone from the charging case 20, ensure specific aesthetics, and improve product appearance exquisiteness.

The opening of the second top slot 2015 may be disposed at an interval from the opening of the second bottom slot 2016. In this case, an end that is of the opening of the second bottom slot 2016 and that is close to the opening of the second top slot 2015 is lower than an end that is of the opening of the second top slot 2015 and that is close to the opening of the second bottom slot 2016. In this embodiment, the opening of the second bottom slot 2016 may be significantly lower than the opening of the second top slot 2015, so that when the second earphone 10" is placed in the second earphone slot 20b, a larger part of the second earphone 10" is exposed relative to the charging case 20.

A lowest part of a bottom wall of the second top slot 2015 is not lower than a lowest edge of the opening of the second bottom slot 2016. In this embodiment, when the second earphone 10" is placed in the second earphone slot 20b, a larger part of the second earphone 10" is exposed relative to the charging case 20.

For example, when the second earphone 10" is placed in the second earphone slot 20b, a bottom part of a main housing member of the main housing 11" is located in the second bottom slot 2016, both the front housing 12" and a top part of the main housing member are partially located in the second top slot 2015 and partially located outside the case body 201, and a middle part of the main housing member is located outside the case body 201. For a diagram of a structure and descriptions of the main housing member of the main housing 11", refer to the foregoing related content of the main housing member 113 of the earphone 10.

For example, a top part of the case body lining 2012 may protrude relative to the case body housing 2011, that is, the top surface 2011a of the case body housing 2011 protrudes relative to the top surface 2012a of the case body lining 2012. In this case, the user can more conveniently take out the earphone placed in the charging case 20, to improve user experience.

The top surface 2011a of the case body housing 2011 may be a curved surface, so that shapes of the opening of the first top slot 2013 and the opening of the first bottom slot 2014 better match and support the first earphone 10', and shapes of the opening of the second top slot 2015 and the opening of the second bottom slot 2016 may better match and support the second earphone 10". In this case, the two earphones are stably and reliably placed in the charging case 20, and are convenient for the user to take out. In addition, the display surface of the charging case 20 is beautiful and exquisite. In some other embodiments, the top surface 2011a of the case body housing 2011 may alternatively be a plane. This is not strictly limited in this embodiment of this application.

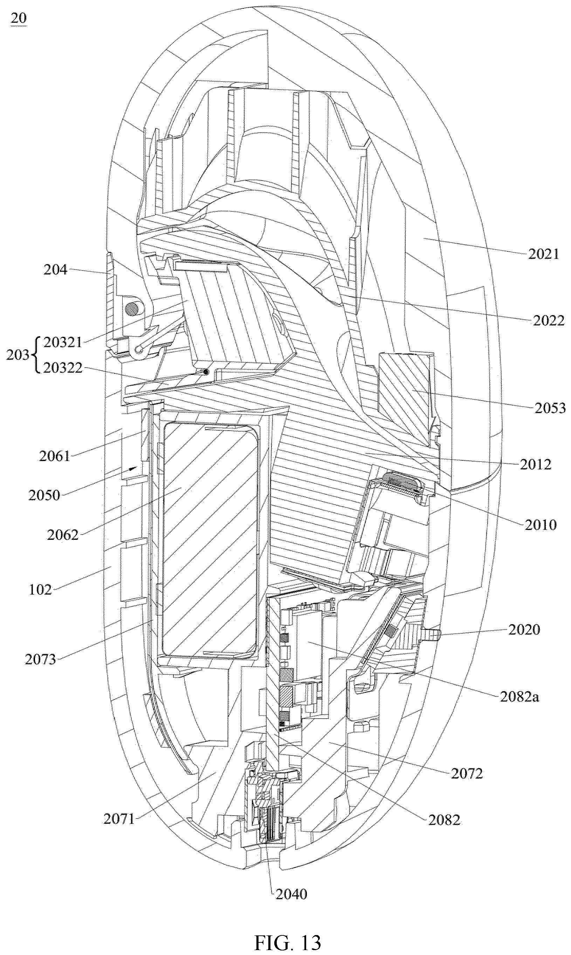

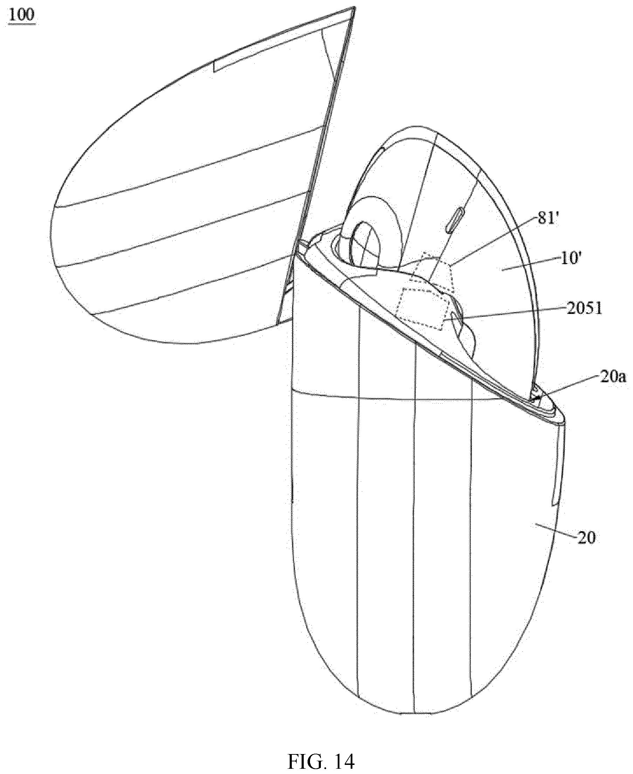

Refer to FIG. 11 to FIG. 14. FIG. 13 is a diagram of a cross-sectional structure of FIG. 10A along D-D, and FIG. 14 is a diagram of a structure of the earphone assembly 100 shown in FIG. 8 at another angle. For ease of illustration, a view in FIG. 13 is obtained by rotating a view in FIG. 10A.

In some embodiments, as shown in FIG. 11 and FIG. 13, the charging case 20 further includes a hinge assembly 203 and a decorative part 204. The hinge assembly 203 is mounted on the case body 201, and the case cover 202 may be rotatably connected to the case body 201 by using the hinge assembly 203. The decorative part 204 is mounted on an outer side of the hinge assembly 203, and is configured to cover and decorate the hinge assembly 203, to improve appearance exquisiteness of the charging case 20.

In some embodiments, as shown in FIG. 11 and FIG. 12, the charging case 20 further includes a magnetic attraction assembly 205, and the magnetic attraction assembly 205 includes a first magnet 2051, a second magnet 2052, a third magnet 2053, and a fourth magnet 2054.

The first magnet 2051 is fastened to the case body lining 2012, and the first magnet 2051 is located below the top surface of the case body lining 2012, and is located between the first top slot 2013 and the first bottom slot 2014. In this embodiment, there is large space between the first top slot 2013 and the first bottom slot 2014, so that the first magnet 2051 with a large volume can be placed, to increase magnetic attraction force used to attract the first earphone 10'. As shown in FIG. 14, when the first earphone 10' is placed in the first earphone slot 20a, a magnetic attraction member 81' of the first earphone 10' and the first magnet 2051 of the charging case 20 are disposed opposite to each other, and the magnetic attraction member 81' and the first magnet 2051 are close to each other and have a small spacing, to generate sufficient magnetic attraction force, so that the first earphone 10' is stably placed in the charging case 20.

The second magnet 2052 is fastened to the case body lining 2012, and the second magnet 2052 is located below the top surface of the case body lining 2012, and is located between the second top slot 2015 and the second bottom slot 2016. When the second earphone 10" is placed in the second earphone slot 20b, a magnetic attraction member of the second earphone 10" and the second magnet 2052 of the charging case 20 are disposed opposite to each other, and the magnetic attraction member and the second magnet 2052 are close to each other and have a small spacing.

As shown in FIG. 9 and FIG. 13, the third magnet 2053 is fastened to the case cover lining 2022, the third magnet 2053 is located between the case cover lining 2022 and the case cover housing 2021, and the third magnet 2053 is located at a middle position of the second end 202b of the case cover 202, and is disposed close to a bottom part of the case cover 202.

With reference to FIG. 9, FIG. 10A, and FIG. 11, there may be two fourth magnets 2054. The fourth magnet 2054 is fastened to the case body lining 2012, and is located between the case body lining 2012 and the case body housing 2011. The fourth magnet 2054 is located at a middle position of the second end 201b of the case body 201, and is disposed close to the top part of the case body 201. When the charging case 20 is closed, magnetic attraction force is generated between the third magnet 2053 and the fourth magnet 2054, so that the charging case 20 is stably closed.

### Hinge assembly 203 and decorative part 204 of the charging case 20:

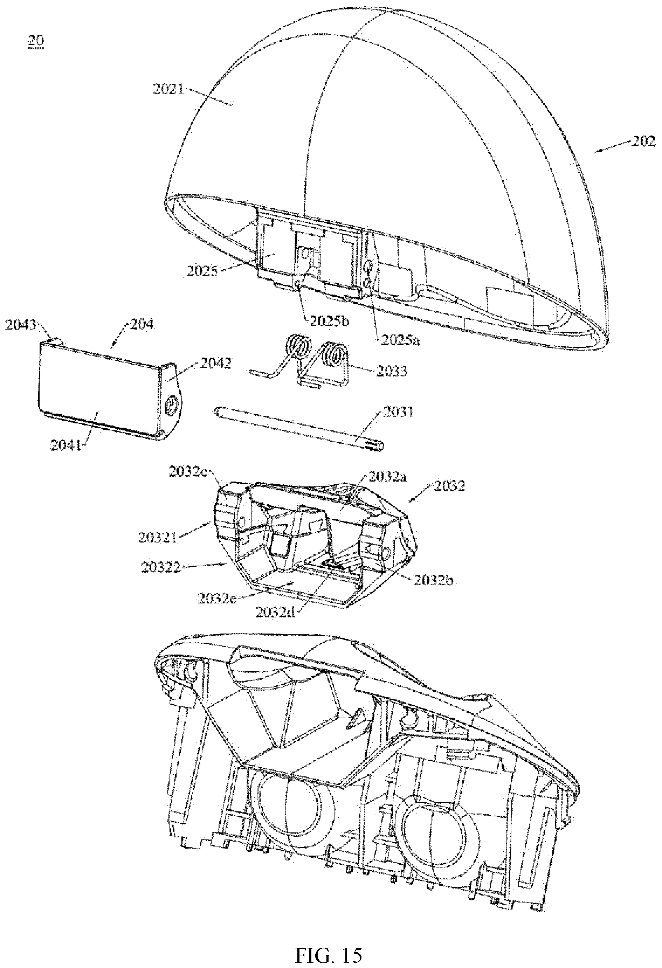

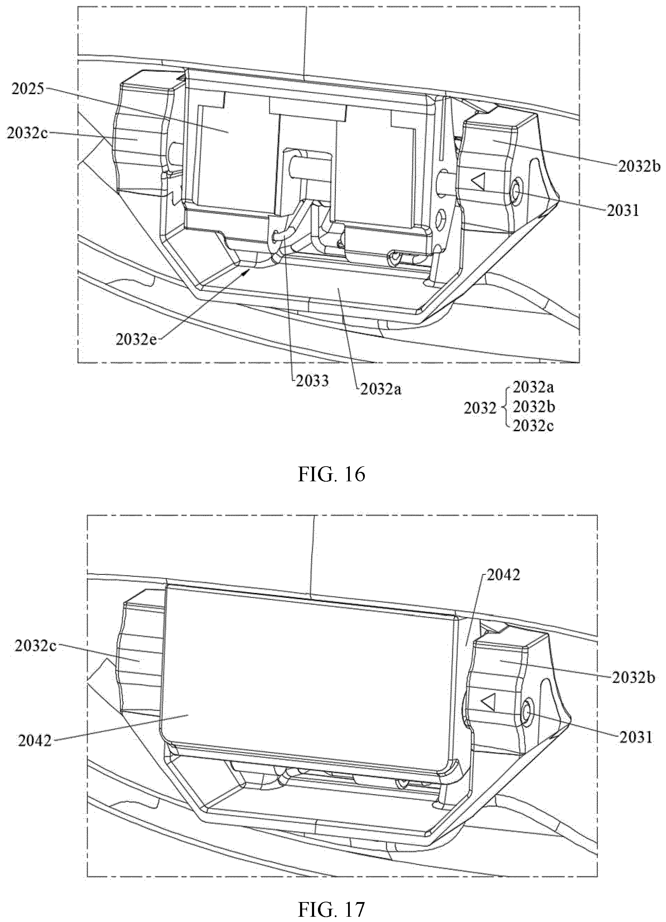

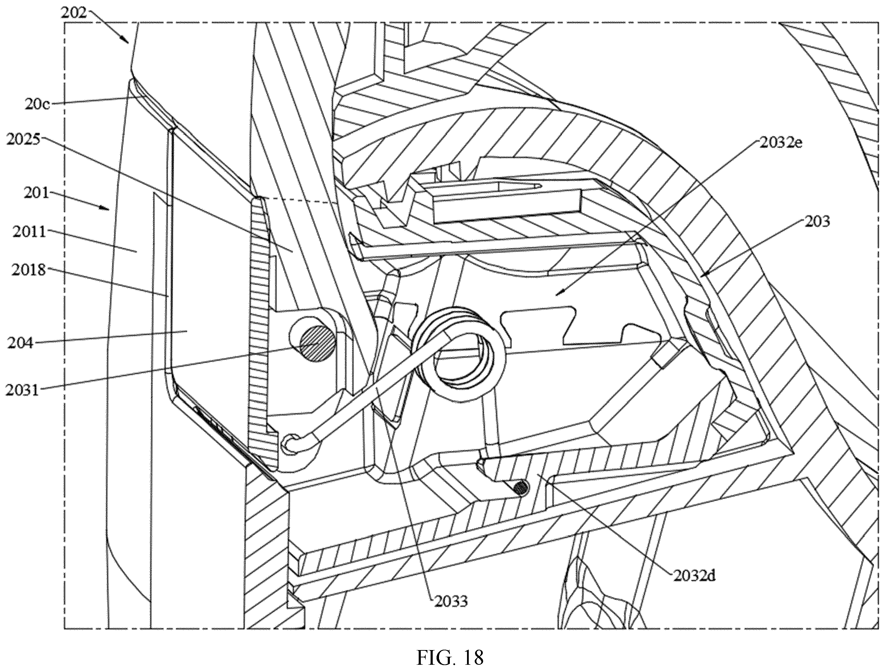

Refer to FIG. 15 to FIG. 18. FIG. 15 is a diagram of a partial structure of the charging case 20 shown in FIG. 11, FIG. 16 is a diagram 1 of an assembly structure of the partial structure in FIG. 15, FIG. 17 is a diagram 2 of an assembly structure of the partial structure in FIG. 15, and FIG. 18 is a diagram of a partial structure of the charging case 20 shown in FIG. 13. For ease of illustration, a view in FIG. 17 is obtained by rotating a view in FIG. 13.

In some embodiments, the hinge assembly 203 may include a rotating shaft 2031, a hinge bracket 2032, and a torsion spring 2033. The hinge bracket 2032 is fastened to the case body 201, and the case cover 202 is rotatably connected to the hinge bracket 2032 by using the rotating shaft 2031, to be rotatably connected to the case body 201. Specifically, the case body lining 2012 is provided with a mounting groove 2017, and the hinge bracket 2032 is mounted in the mounting groove 2017, to be fixedly connected to the case body lining 2012. The rotating shaft 2031 is inserted into the hinge bracket 2032, and the rotating shaft 2031 is further inserted into the case cover 202.

The hinge bracket 2032 may include a main body 2032a, a first support arm 2032b, a second support arm 2032c, and a clamping block 2032d. Movable space 2032e is formed on an inner side of the main body 2032a, and the first support arm 2032b and the second support arm 2032c are respectively fastened to two ends of the main body 2032a and located on two sides of the movable space 2032e. Both the first support arm 2032b and the second support arm 2032c are provided with rotating shaft holes. The clamping block 2032d is located in the movable space 2032e and is fastened to the main body 2032a. One end of the rotating shaft 2031 is inserted into the rotating shaft hole of the first support arm 2032b, and the other end passes through the movable space 2032e and then is inserted into the rotating shaft hole of the second support arm 2032c.

The case cover 202 may further include an adapter block 2025, and the adapter block 2025 may be fastened to the case cover housing 2021. The adapter block 2025 is rotatably connected to the hinge bracket 2032 by using the rotating shaft 2031, and the rotating shaft 2031 is inserted into the adapter block 2025. The adapter block 2025 is provided with a rotating shaft hole 2025a and a clamping hole 2025b. The rotating shaft hole 2025a is disposed at an interval from the clamping hole 2025b, and the clamping hole 2025b is located on a side that is of the rotating shaft hole 2025a and that is far away from the case cover housing 2021. The adapter block 2025 is located in the movable space 2032e of the hinge bracket 2032, and the rotating shaft 2031 passes through the rotating shaft hole 2025a of the adapter block 2025.

The torsion spring 2033 is located in the movable space 2032e of the hinge bracket 2032, one end of the torsion spring 2033 is connected to the hinge bracket 2032, and the other end of the torsion spring 2033 is connected to the adapter block 2025. For example, one end of the torsion spring 2033 may abut against or be clamped to the clamping block 2032d of the hinge bracket 2032, and the other end of the torsion spring 2033 may be inserted into the clamping hole of the adapter block 2025. In this embodiment, the torsion spring 2033 is disposed, so that a feel of opening and closing the cover is achieved for the charging case 20.

For example, the decorative part 204 includes a first plate 2041, a second plate 2042, and a third plate 2043. The second plate 2042 and the third plate 2043 are respectively connected to two ends of the first plate 2041, and are both bent to the first plate 2041. Both the second plate 2042 and the third plate 2043 are provided with rotating shaft holes. The first plate 2041 is located on an outer side of the adapter block 2025, and covers an outer side surface of the adapter block 2025. The second plate 2042 is located between the adapter block 2025 and the first support arm 2032b of the hinge bracket 2032. The third plate 2043 is located between the adapter block 2025 and the second support arm 2032c of the hinge bracket 2032. The rotating shaft 2031 is inserted into the rotating shaft hole of the second plate 2042 and the rotating shaft hole of the third plate 2043, to be inserted into the second plate 2042 and the third plate 2043.

As shown in FIG. 18, the case body 201 is provided with a notch 2018. The notch 2018 may be formed on the case body housing 2011, and the notch 2018 is disposed to correspond to the adapter block 2025 of the case cover 202, to provide movable space for the adapter block 2025. When the case cover 202 is closed relative to the case body 201, the adapter block 2025 is located on a side that is of the parting surface 20c and that is close to the case body 201, and covers the notch 2018. The case body 201 blocks one part of the hinge assembly 203, and the decorative part 204 blocks the other part of the hinge assembly 203, so that an appearance of the charging case 20 is complete.

In this embodiment, the decorative part 204 covers the outer side surface of the adapter block 2025. When the charging case 20 is closed, the decorative part 204 covers the notch 2018 of the case body 201, and jointly forms the appearance of the charging case 20 with the case body 201. A structure in which two ends pass through the shaft is designed for the decorative part 204. Therefore, a problem of uneven gaps between the decorative part and both a conventional rear-mounted decorative part and the case body is resolved, and aesthetics is improved. In addition, support for the rotating shaft 2031 is increased, so that structural strength of the hinge assembly 203 is high, to improve reliability.

With reference to FIG. 13 and FIG. 15, in some embodiments, the charging case 20 further includes a wireless charging coil 2061 and a battery 2062. Both the wireless charging coil 2061 and the battery 2062 are fastened in the case body 201, and are located below the hinge assembly 203. The charging case 20 may charge the battery 2062 by using the wireless charging coil 2061.

For example, the hinge bracket 2032 may include a metal part 20321 and a plastic part 20322, the metal part 20321 and the plastic part 20322 are fastened to each other, and the rotating shaft 2031 is inserted into the metal part 20321. That is, both the rotating shaft hole of the first support arm 2032b and the rotating shaft hole of the second support arm 2032c are formed on the metal part 20321. The metal part 20321 may be made of a metal material such as stainless steel. The hinge bracket 2032 may be an integrally formed structural member, to have high structural strength. For example, the hinge bracket 2032 may be formed by using a metal injection molding (Metal injection Molding, MIM) process, a metal insert injection molding process, or the like. The plastic part 20322 is located between the metal part 20321 and the wireless charging coil 2061.

In this embodiment, the hinge bracket 2032 may reduce adverse impact of a metal piece on the charging case 20 in a wireless charging process while ensuring strength of a connection structure, to ensure wireless charging performance of the earphone assembly 100.

For example, the decorative part 204 may be made of an aluminum alloy material. In this case, the decorative part 204 is beautiful and has high structural strength, and impact on the wireless charging process of the charging case 20 can be reduced. The decorative part 204 may be formed by bending a plate, has high structural strength, is easy to process, and has low costs.

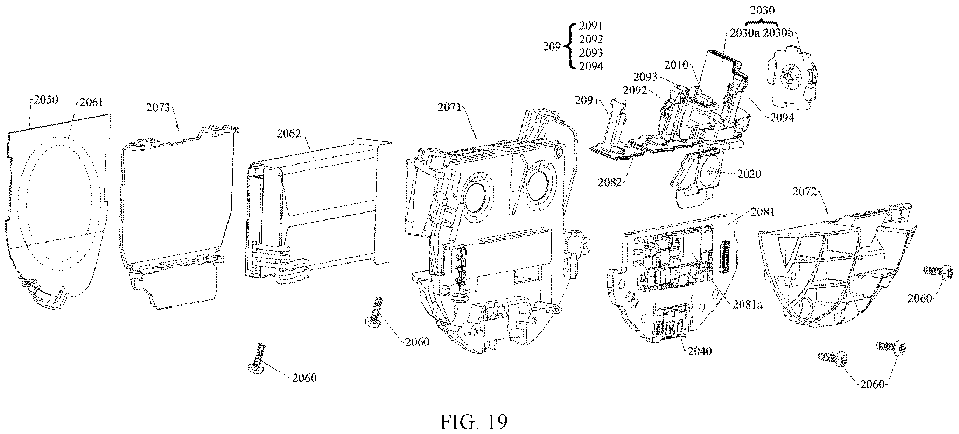

Refer to FIG. 12, FIG. 13, and FIG. 19. FIG. 19 is a diagram of an exploded structure of the partial structure of the charging case 20 shown in FIG. 11.

In some embodiments, the charging case 20 further includes a plurality of parts mounted between the case body housing 2011 and the case body lining 2012. The plurality of parts may include a first housing member 2071, a second housing member 2072, a third housing member 2073, a circuit board 2081, a connection circuit board 2082, an electrode assembly 209, a Hall sensor 2010, an indicator 2020, a key assembly 2030, an electrical connector 2040, a wireless charging assembly 2050, the battery 2062, and a plurality of fasteners 2060.

The second housing member 2072 and the third housing member 2073 are respectively located on two sides of the first housing member 2071, and are fixedly connected to the first housing member 2071. The second housing member 2072 may be fastened to the first housing member 2071 by using the fastener 2060. In some other embodiments, the second housing member 2072 may alternatively be fastened to the first housing member 2071 through snap-fitting or adhesion, or in another manner. The third housing member 2073 may be fastened to the first housing member 2071 through snap-fitting. In some other embodiments, the second housing member 2072 may alternatively be fastened to the first housing member 2071 by using the fastener 2060, through adhesion, or in another manner.

The circuit board 2081 is located between the first housing member 2071 and the second housing member 2072, and is fixedly connected to the first housing member 2071. The circuit board 2081 may be located below the first bottom slot 2014 and the second bottom slot 2016. A plurality of components may be disposed on the circuit board 2081, and include but are not limited to a main control chip 2081a, a fitting component of the main control chip 2081a, a connection port, and the like. The plurality of components are electrically connected to the circuit board 2082. The circuit board 2081 may be a rigid printed circuit board.

The connection circuit board 2082 may be a flexible circuit board or a rigid-flex circuit board. Parts such as the electrode assembly 209, a key 2030a of the key assembly 2030, the Hall sensor 2010, and the indicator 2020 may be fastened and electrically connected to the connection circuit board 2082. The connection circuit board 2082 is electrically connected to the circuit board 2081, so that a part on the connection circuit board 2082 is electrically connected to the circuit board 2081. The connection circuit board 2082 may be partially located below the first bottom slot 2014 and the second bottom slot 2016, and partially located on a side that is of the second bottom slot 2016 and that is far away from the first bottom slot 2014.

The electrode assembly 209 may include a first electrode 2091, a second electrode 2092, a third electrode 2093, and a fourth electrode 2094. Both the first electrode 2091 and the second electrode 2092 are at least partially located in the first earphone slot 20a, and the first electrode 2091 and the second electrode 2092 are configured to be electrically connected to the first earphone 10' placed in the first earphone slot 20a. The first electrode 2091 and the second electrode 2092 are one positive electrode and one negative electrode. Both the third electrode 2093 and the fourth electrode 2094 are at least partially located in the second earphone slot 20b, and the third electrode 2093 and the fourth electrode 2094 are configured to be electrically connected to the second earphone 10" placed in the second earphone slot 20b. The third electrode 2093 and the fourth electrode 2094 are one positive electrode and one negative electrode. The second electrode 2092 and the third electrode 2093 are located between the first electrode 2091 and the fourth electrode 2094. For example, a spring plate structure may be used for the plurality of electrodes. In some other embodiments, an ejector pin structure or another structure may alternatively be used for the plurality of electrodes.

The Hall sensor 2010 is located between the first bottom slot 2014 and the second bottom slot 2016, and is disposed close to the top surface of the case body lining 2012. When the charging case 20 is closed, the Hall sensor 2010 is disposed to correspond to the third magnet 2053. The Hall sensor 2010 is configured to detect whether the charging case 20 is closed.

A keycap 2030b of the key assembly 2030 may be mounted on a housing of the housing 1, and is a movable part. The keycap 2030b abuts against the key 2030a when being pressed by the user.

The indicator 2020 may be located on a side that is of the second housing member 2072 and that faces away from the first housing member 2071, and is fastened to the second housing member 2072. Light emitted by the indicator 2020 may pass through the case body housing 2011, and be emitted to an outside of the charging case 20. The indicator 2020 may be configured to indicate a charging status, a battery level change, and the like.

The battery 2062 is located between the first housing member 2071 and the third housing member 2073, and the battery 2062 is fastened to the first housing member 2071. The battery 2062 is located below the first top slot 2013 and the second top slot 2015, and is located on one side of the first bottom slot 2014 and the second bottom slot 2016. A lead of the battery 2062 may bypass the first housing member 2071 and be connected to the circuit board 2081.

The wireless charging assembly 2050 is located on a side that is of the third housing member 2073 and that faces away from the first housing member 2071, and is fastened to the third housing member 2073. The wireless charging assembly 2050 includes the wireless charging coil 2061 and a lead, and the lead bypasses the third housing member 2073 and is connected to the circuit board 2081.

The electrical connector 2040 may be fastened and electrically connected to the circuit board 2082. The electrical connector 2040 is disposed to correspond to a charging port at a bottom part of the case body housing 2011. In this embodiment, the charging case 20 may be wirelessly charged by using the wireless charging coil 2061, or the charging case 20 may be charged in a wired manner by using the electrical connector 2040.

The foregoing embodiments are merely used to describe some technical solutions of this application, but are not intended to limit the technical solutions. Although this application is described in detail with reference to the foregoing embodiments, persons of ordinary skill in the art should understand that provided that no conflict occurs, they may still make modifications to the technical solutions described in the foregoing embodiments, make equivalent replacements to some technical features thereof, or combine the technical solutions described in different embodiments, without departing from the scope of the technical solutions of embodiments of this application.

## Claims

1. A charging case, comprising two earphone slots that are disposed at an interval, wherein the earphone slot is configured to accommodate an earphone, the charging case comprises a case body and a case cover, and the case cover is rotatably connected to the case body; and
the earphone slot comprises a top slot and a bottom slot that are located in the case body, the top slot is configured to accommodate an earbud of the earphone, the bottom slot is configured to accommodate a stem of the earphone, the case body comprises a top surface disposed to face the case cover, both an opening of the top slot and an opening of the bottom slot are located on the top surface of the case body, and the opening of the bottom slot is lower than the opening of the top slot.

2. The charging case according to claim 1, wherein the opening of the bottom slot and the opening of the top slot are disposed at an interval.

3. The charging case according to claim 1 or 2, wherein a lowest part of a bottom wall of the top slot is not lower than a lowest edge of the opening of the bottom slot.

4. The charging case according to claim 1 or 2, wherein the case body has a first end and a second end that are disposed opposite to each other, the case cover has a first end and a second end that are disposed opposite to each other, the first end of the case cover is rotatably connected to the first end of the case body, and the second end of the case cover is far away from the second end of the case body, to open the case cover relative to the case body, or the second end of the case cover is close to the second end of the case body, to close the case cover relative to the case body; and
the top slot is closer to the first end of the case body than the bottom slot.

5. The charging case according to claim 4, wherein the first end of the case body is higher than the second end of the case body.

6. The charging case according to claim 4, wherein a case body lining is fastened on an inner side of a case body housing, the case body lining has the top slot and the bottom slot, and a top part of the case body lining protrudes relative to the case body housing.

7. The charging case according to claim 6, wherein a top surface of the case body housing is a plane, and a top surface of the case body lining is a curved surface.

8. The charging case according to claim 7, wherein the charging case has a width direction, a thickness direction, and a height direction that are perpendicular to each other, the two earphone slots are arranged in the width direction of the charging case, a dimension of the charging case in the height direction is greater than a dimension of the charging case in the thickness direction, and the top surface of the case body housing is inclined to the thickness direction of the charging case, and is inclined to the height direction of the charging case.

9. The charging case according to claim 6, wherein the charging case comprises a magnet, and the magnet is fastened to the case body lining, and is located between the top slot and the bottom slot.

10. The charging case according to claim 6, wherein the charging case further comprises a battery and a circuit board, both the battery and the circuit board are fastened on the inner side of the case body housing, and are located below the case body lining, the circuit board is located below the bottom slot, and the battery is located below the top slot.

11. The charging case according to claim 1, wherein the charging case further comprises a hinge assembly, the hinge assembly comprises a rotating shaft and a hinge bracket, the hinge bracket is fastened to the case body, and the case cover is rotatably connected to the hinge bracket by using the rotating shaft, to be rotatably connected to the case body.

12. The charging case according to claim 11, wherein the charging case further comprises a wireless charging coil, and the wireless charging coil is fastened in the case body; and
the hinge bracket comprises a metal part and a plastic part, the plastic part is located between the metal part and the wireless charging coil, and the rotating shaft is inserted into the metal part.

13. The charging case according to claim 11 or 12, wherein the case cover comprises an adapter block, and the adapter block is rotatably connected to the hinge bracket by using the rotating shaft; and
the case body is provided with a notch, and when the case cover is closed relative to the case body, the adapter block covers the notch.

14. The charging case according to claim 13, wherein the hinge assembly further comprises a decorative part, and the decorative part is fastened on an outer side of the adapter block and covers an outer side surface of the adapter block.

15. The charging case according to claim 14, wherein the decorative part is made of an aluminum alloy material.

16. The charging case according to claim 14 or 15, wherein the decorative part comprises a first plate, a second plate, and a third plate, the second plate and the third plate are respectively connected to two ends of the first plate, and are both bent to the first plate, the first plate covers the outer side surface of the adapter block, and the rotating shaft is inserted into the second plate and the third plate.

17. The charging case according to claim 13, wherein the hinge assembly further comprises a torsion spring, one end of the torsion spring is connected to the hinge bracket, and the other end of the torsion spring is connected to the adapter block.

18. The charging case according to claim 1 or 2, wherein the charging case comprises a first electrode, a second electrode, a third electrode, and a fourth electrode, both the first electrode and the second electrode are at least partially located in one earphone slot, both the third electrode and the fourth electrode are at least partially located in the other earphone slot, the second electrode and the third electrode are located between the first electrode and the fourth electrode, a polarity of the first electrode is the same as a polarity of the third electrode, and a polarity of the second electrode is the same as a polarity of the fourth electrode.

19. An earphone assembly, comprising two earphones and the charging case according to any one of claims 1 to 18.
